# EUROPEAN PATENT APPLICATION

(11) **EP 2 405 522 A1**
(43) Date of publication of application: **11.01.2012**
(21) Application number: 10748773.8
(22) Date of filing: 03.03.2010
(51) Int. Cl.: H01M 10/0567, H01M 10/0525, H01M 10/0569

(54) **LITHIUM-ION BATTERY**

(30) Priority: 03.03.2009 JP 2009049422
(71) Applicant: Shin-Kobe Electric Machinery Co., Ltd., Tokyo 104-0044 (JP)
(72) Inventor: TSUJIKAWA, Tomonobu, Tokyo 108-0023 (JP); MATSUSHIMA, Toshio, Tokyo 108-0023 (JP); ICHIMURA, Masahiro, Tokyo 110-0015 (JP); OGATA, Tsutomu, Tokyo 110-0015 (JP); ARAKAWA, Masayasu, Tokyo 110-0015 (JP); YABUTA, Kahou, Tokyo 108-0023 (JP); MATSUSHITA, Takashi, Tokyo 108-0023 (JP); ITOH, Youhei, Tokyo 104-0044 (JP); TERADA, Masayuki, Tokyo 104-0044 (JP); HAYASHI, Koji, Tokyo 104-0044 (JP); KURITA, Kenji, Tokyo 104-0044 (JP); ISHIZAKI, Yuki, Tokyo 104-0044 (JP)
(74) Representative: Viering, Jentschura & Partner
(86) International application number: PCT/JP2010/053427
(87) International publication number: WO 2010/101179

(57) **Abstract**

A lithium ion battery capable of maintaining for a long time fire resistance of a nonaqueous electrolytic solution at a time of battery abnormality to secure safety is provided. In the lithium ion battery, two kinds of organic solvent, EC and DEC, are used for mixed organic solvent which forms the nonaqueous electrolytic solution, and liquid flame retardant formed by phosphazene A having a boiling point closely to that of EC and phosphazene B having a boiling point closely to that of DEC is added to the electrolytic solution. At battery abnormality, when the battery temperature goes up due to internal short circuit of positive and negative electrodes caused bymeltingof separators to decompose eachof EC and DEC, thephosphazene A and B, each having the boiling point closely to that of EC and DEC, decompose timely to function, thereby fire resistance of the electrolytic solution can be maintained for a long time to secure safety of the battery at the time of battery abnormality.

## Description

### FIELD OF THE INVENTION

The present invention relates to a lithium ion battery, and particularly relates to a lithium ion battery where an electrode group that a positive electrode plate and a negative electrode plate are disposed via separators is infiltrated by a nonaqueous electrolytic solution in which a lithium salt is mixed with organic solvent and that is accommodated in a battery container.

### DESCRIPTON OF RELATED ART

Because a lithium ion battery has high voltage/high energy density and it is also excellent in storage performance or operating performance at a low temperature, it is being widely used in portable type electronic products for civilian use. At the same time, research and development for making this battery large to utilize it as electric vehicle use or as nighttime electric power storage equipment for home use are being carried out enthusiastically.

However, in a case that foreign materials are mixed inside the battery or in a case that the battery falls into an abnormal state such as overcharge or the like due to failure of a battery controller or a battery charger, a battery temperature goes up to melt separators for separating a positive electrode plate and a negative electrode plate, and then an internal short circuit may occur. When the internal short circuit occurs, the battery temperature goes up further, and at the same time, a battery internal pressure increases because of gas generation due to decomposition of a nonaqueous electrolytic solution. This brings about a gas gush from a cleavage valve which is disposed at a battery container or a battery lid, and sometimes there is a case of a battery burst or catching fire due to sparks occurred at a time of the short circuit.

Conventionally, as measures for a time of battery abnormality, a technique for lowering internal pressure of a battery prior to its burst, by making use of an increase in internal pressure due to a decomposed gas, to function a cleavage valve or a current cut-off valve each disposed at a battery lid (e.g., see JP11-219692A, JP2005-108503A.), or a technique for adding one kind of phosphate ester or phosphazene flame retardant to a nonaqueous electrolytic solution (e.g., see JP5-151971A, JP2001-217007A.) is known.

However, in a case that merely one kind of flame retardant is added to the nonaqueous electrolytic solution like the known technique, because the flame retardant decomposes at a temperature that organic solvent having a low boiling point decomposes among organic solvents forming the nonaqueous electrolytic solution, a decomposed gas derived from the flame retardant has already gushed out of the cleavage valve to the outside at a time around organic solvent having a high boiling point decomposes. Thus, because the conventional technique could not maintain fire (flame) resistance of the nonaqueous electrolytic solution for a long time, there is room for improvement in securing safety.

### SUMMARY OF THE INVENTION

In view of the above circumstances, an object of the present invention is to provide a lithium ion battery capable of maintaining for a long time fire resistance of a nonaqueous electrolytic solution at a time of battery abnormality to secure safety.

In order to achieve the above object, the present invention is directed to a lithium ion battery where an electrode group that a positive electrode plate and a negative electrode plate are disposed via separators is infiltrated by a nonaqueous electrolytic solution in which a lithium salt is mixed with organic solvent and that is accommodated in a battery container, wherein the organic solvent is formed by mixing a plurality of organic solvents, and wherein a plurality of liquid flame retardants each having a boiling point closely to that of each of the plurality of organic solvents are added to the nonaqueous electrolytic solution.

In the present invention, it is preferable that the plurality of liquid flame retardants each having a boiling point set within a range of ± 50 deg. C. to that of each of the plurality of organic solvents are added to the nonaqueous electrolytic solution. The organic solvent may be mixed organic solvent of ethylene carbonate and dimethyl carbonate, and phosphazene flame retardants A and B each having a different boiling point may be added to the nonaqueous electrolytic solution. At this time, it is preferable that the boiling point of the phosphazene flame retardant A is 194 deg. C. and that of the phosphazene flame retardant B is 125 deg. C. Further, it is desirable that an added amount of the flame retardants is less than 25 wt% to mixed liquid of the nonaqueous electrolytic solution and the flame retardants. In the flame retardants, a flame retardant having a low boiling point may be added more than a flame retardant having a high boiling point. A lithium transition metal complex oxide may be used as a positive electrode active material in the positive electrode plate. At this time, a carbon material may be used as a negative electrode active material in the negative electrode plate. The positive electrode plate may be formed by applying a positive electrode mixture containing the positive electrode active material to both surfaces of a collector and the negative electrode plate may be formed by applying a negative electrode mixture containing the negative electrode active material to both surfaces of a collector. The electrode group may be formed by winding the positive electrode plate and the negative electrode plate via the separators.

According to the present invention, effects can be obtained that, when a temperature of the battery goes up due to an internal short circuit at a time of battery abnormality and each of the plurality of organic solvents decomposes, since each of the flame retardants closely to a boiling point of each of the plurality of organic solvents decomposes in the due order to function, the battery can maintain fire resistance of the nonaqueous electrolytic solution for a long time to secure safety of the battery at the time of battery abnormality.

### BRIEF DESCRIPTION OF THE DRAWING

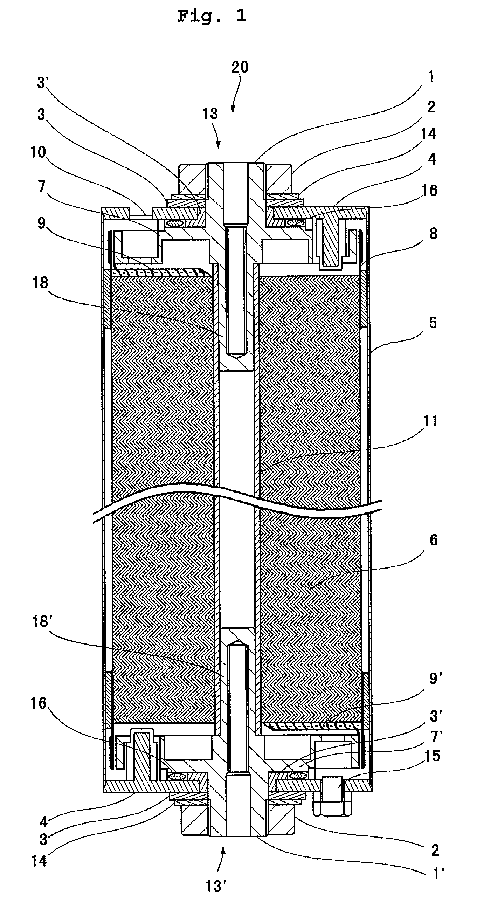

Fig. 1 is a sectional view of a lithium ion battery of an embodiment to which the present invention is applicable.

### DETAILED DESCRIPTION OF THE PREFERRED EMBODIMENTS

With reference to the drawing, an embodiment in which the present invention is applied to a lithium ion battery used for a pure electric vehicle (PEV) will be explained below.

### (Outline)

As shown in Fig. 1, a lithium ion battery 20 of this embodiment has, as a casing, a cylindrical battery container 5 without bottoms and two disc shaped battery lids 4 disposed at both end portions of the battery container 5. An electrode group 6 in which a positive electrode plate and a negative electrode plate are disposed via separators around a hallow cylindrical rod core 11 made of polypropylene is infiltrated by a nonaqueous electrolytic solution (not shown) to be accommodated in the casing.

As details will be stated later, the nonaqueous electrolytic solution is formed by dissolving a lithium salt into mixed organic solvent with which a plurality of organic solvents are mixed. A plurality of liquid flame retardants, each having a boiling point closely to that of each of the plurality of organic solvents forming the mixed organic solvent, are added to the nonaqueous electrolytic solution at a percentage of less than 25 wt% to the nonaqueous electrolytic solution. The details of the flame retardants will be also explained later.

Further, the lithiumion battery 20 is equipped with a positive pole stud 13 made of aluminum and a negative pole stud 13' made of copper disposed at opposite positions in a vertical direction with each other via the electrode group 6. The positive pole stud 13 has a flange portion 7 which positive electrode lead pieces 9 led from the positive electrode plate are welded to a peripheral surface thereof and of which one surface side (bottom surface side in Fig. 1) abuts against the rode core 11, a protruded portion 18 which is inserted into the rode core 11 and a terminal portion 1 which is exposed from the battery lid 4 at an opposite side of the protruded portion 18, and the flange portion 7, the protruded portion 18 and the terminal portion 1 are formed integrally. On the other hand, the negative pole stud 13' has a flange portion 7' which negative electrode lead pieces 9' led from the negative electrode plate are welded to a peripheral surface thereof and of which one surface side (upper surface side in Fig. 1) abuts against the rode core 11, a protruded portion 18' which is inserted into the rode core 11 at an opposite side of the protruded portion 18 of the positive pole stud 13 and a terminal portion 1' which is exposed from the battery lid 4 at an opposite side of the protruded portion 18', and the flange portion 7', the protruded portion 18' and the terminal portion 1' are formed integrally.

### (Manufacture Process)

Next, the lithium ion battery 20 of this embodiment will be explained more in detail and a manufacture process of the lithium ion battery 20 will be explained.

### (Manufacture of Positive Electrode Plate)

The positive electrode plate constituting the electrode group 6 is manufactured in the following manner. Lithiummanganate (LiMnO₄) powder serving as a positive electrode active material, scale shaped graphite (average particle diameter: 20µm) as a conductive material and polyvinylidene fluoride (PVDF) as a binder are mixed, the resultant mixture is added with N-methyl-2-pyrolidone (NMP) which is dispersing solvent, and thus added mixture is stirred to produce a slurry. A positive electrode mixture layer is formed by applying the slurry to both surfaces of an aluminum foil (positive electrode collector) having a thickness of 20µm. When the slurry is applied, a non-applied portion having a width of 50mm is left at one side edge along a longitudinal direction of the aluminum foil. Then, it is dried, pressed and then cut to obtain the positive electrode plate having a width of 389mm and a length of 5100mm. Incidentally, a thickness of the positive electrode mixture layer is set to 275µm (provided that the thickness of the collector is not included), and an applying amount of the positive electrode active material per one side of the collector is set to 350g/m².

The non-applying portion having a width of 50mm formed at the positive electrode plate is notched to remove a portion thereof, and portions having a rectangular shape (comb shape) are formed to be used as positive electrode lead pieces 9 for collecting electricity. Incidentally, a width of each of the positive electrode lead pieces 9 is set to 10mm and an interval between the adjacent positive electrode lead pieces 9 is set to 20mm.

### (Manufacture of Negative Electrode Plate)

On the other hand, the negative electrode plate constituting the electrode group 6 is manufactured in the following manner. Artificial graphite powder serving as a negative electrode active material and PVDF as a binder are mixed, the resultant mixture is added with NMP as dispersing solvent, and thus addedmixture is stirred to produce a slurry. A negative electrode mixture layer is formed by applying the slurry to both surfaces of a copper foil (negative electrode collector) having a thickness of 10µm. When the slurry is applied, a non-applied portion having a width of 50mm is left at one side edge along a longitudinal direction of the copper foil. Then, it is dried, pressed and then cut to obtain the negative electrode plate having a width of 395mm and a length of 5290mm. Incidentally, a thickness of the negative electrode mixture layer is set to 201µm (provided that the thickness of the collector is not included), and an applying amount of the negative electrode active material per one side of the collector is set to 130.8g/m².

The non-applying portion having a width of 50mm formed at the negative electrode plate is notched to remove a portion thereof, and portions having a rectangular shape are formed to be used as negative electrode lead pieces 9' for collecting electricity. Incidentally, a width of each of the negative electrode lead pieces 9' is set to 10mm and an interval between the adjacent negative electrode lead pieces 9' is set to 20mm.

Incidentally, also in a width direction of the positive and negative electrode plates, a width of the applying portion of the negative electrode active material is set larger than that of the positive electrode active material so as not to occur facing dislocation (offset) between the applying portion of the positive electrode active material and the applying portion of the negative electrode active material.

### (Manufacture of Electrode Group)

The positive electrode plate and the negative electrode plate are wound in a state that the plates are sandwiched by two porous separators made mainly of polyethylene, which belongs to polyolefin, having a thickness of 36µm to manufacture the electrode group 6. Four sheets of separators are used in total. In winding, end portions of the separators are welded to the rod core 11 at first, then the positive electrode plate, the negative electrode plate and the separators are wound in order to reduce a possibility of winding offset by adjusting positions of the positive electrode plate, the negative electrode plate and the separators. Incidentally, the positive electrode lead pieces 9 and the negative electrode lead pieces 9' are disposed so as to oppose to each other with respect to the electrode group 6. A diameter of the electrode group 6 is set to 63.6 ± 0.1mm by cutting, at the time of winding, the positive electrode plate, the negative electrode plate and the separators at appropriate lengths.

### (Manufacture of Battery)

After the positive electrode lead pieces 9 led from the positive electrode plate are gathered to bend them in a bundle state in order to deform them, they are brought into contact with a periphery of the flange portion 7 of the positive pole stud 13. Then, the positive electrode lead pieces 9 and a periphery of the flange portion 7 are welded (joined) by an ultrasonic welding apparatus to connect them electrically. Incidentally, with respect to the negative electrode plate, in the same manner, the negative electrode lead pieces 9' and a periphery of the flange portion 7' of the negative pole stud 13' are connected electrically by ultrasonic welding.

Then, insulating covering 8 is applied onto the entire outer peripheries of the flange portion 7 of the positive pole stud 13, the flange portion 7' of the negative pole stud 13' and the electrode group 6. An adhesive tape made of polyimide and adhesive agent made of hexameta-acrylate applied one surface thereof is used as the insulating covering 8. After the number of winding of the adhesive tape is adjusted such that an outer peripheral portion of the electrode group 6 is covered by the insulating covering 8 to make the outer peripheral portion slightly smaller than an inner diameter of the battery container 5 made of stainless steel, the electrode group 6 is inserted into the battery container 5. Incidentally, the battery container 5 of this embodiment has an outer diameter of 67mm and an inner diameter of 66mm.

Next, second ceramic washers 3' are respectively fitted on distal portions of the (positive electrode) external terminal 1 and the (negative electrode) external terminal 1' at portions abutting on an external surface of the battery lids 4. First ceramic washers 3 having a flat plate shape are respectively placed on the battery lids 4, and the external terminal 1 and the external terminal 1' are respectively inserted into the first ceramic washers 3.

Thereafter, peripheral faces of the battery lids 4 are fitted to openings of the battery container 5 and an entire contacting portion between the battery lids 4 and the battery container 5 is laser-welded. At this time, the external terminal 1 and the external terminal 1' project outside the battery lids 4 through holes formed at centers of the battery lids 4. Then, metal washers 14, which are smoother than the bottom face of metal nuts 2, are fitted on the external terminal 1 and the external terminal 1' respectively so as the metal washers 14 are brought into contact with the first ceramic washers 3. A cleavage valve 10 which cleaves according to an increase in battery internal pressure is equipped with one (upper side of Fig. 1) of the battery lids 4, and a cleavage pressure thereof is set to 13 to 18 kg/cm². Incidentally, unlike what is called a small sized lithium ion battery for commercial use, a current cutting-off mechanism that cuts off electric current in response to an increase in internal pressure inside the battery is not equipped in the lithium ion battery 20 of this embodiment.

The nut 2 is screwed to each of the external terminal 1 and the external terminal 1' to fasten and fix the battery lid 4 with the flange portion 7 through the metal washer 14, the second ceramic washer 3' and the first ceramic washer 3. At this time, a value of fastening torque is set to 6.86 Nm. Generating elements and the like accommodated inside the battery container are shut off from the atmosphere through compression of each O-ring 16 made of rubber (EPDM) interposed between the back face of the battery lid 4 and the protruded portion 18.

Subsequently, a predetermined amount of the nonaqueous electrolytic solution is injected into the battery container 5 through liquid injection opening 15 formed at another (lower side of Fig. 1) of the battery lids 4, and then the liquid injection opening 15 is sealed so that assembly of the cylindrical lithium ion battery is completed.

### (Electrolytic Solution)

In this embodiment, the nonaqueous electrolytic solution is prepared as follows. After ethylene carbonate (EC) and dimethyl carbonate (DEC) are mixed at a volume ratio of 2:3, lithium hexafluorophosphate (LiPF₆) is dissolved at 1 mole/liter into the mixed solution. Further, flame retardants are added to the nonaqueous electrolytic solution. As the flame retardants, 9 wt% of phosphazene A (boiling point: 194 deg. C.) having a boiling point closely to that (238 deg. C.) of EC and 14 wt% of phosphazene B (boiling point: 125 deg. C.) having a boiling point closely to that (90 deg. C.) of DEC are used.

### (Effects and the like)

Next, effects and the like of the lithium ion battery 20 in this embodiment will be explained.

In the lithium ion battery 20 of this embodiment, two kinds of organic solvent, EC and DEC, are used for the mixed organic solvent which forms the nonaqueous electrolytic solution, and the liquid flame retardant formed by the phosphazene A having the boiling point closely to that of EC and the phosphazene B having the boiling point closely to that of DEC is added to the nonaqueous electrolytic solution. At a time of battery abnormality, when the battery temperature goes up due to the internal short circuit of the positive and negative electrode plates caused by melting of the separators to decompose each of EC and DEC, the phosphazene A and B, each having the boiling point closely to that of EC and DEC, decompose timely to function. For this reason, according to the lithium ion battery 20, fire resistance of the nonaqueous electrolytic solution can be maintained for a long time to secure the safety of the battery at the time of battery abnormality.

Further, in the lithium ion battery 20, the flame retardant formed by the phosphazene A having the boiling point closely to that of EC and the phosphazene B having the boiling point closely to that of DEC is added to the nonaqueous electrolytic solution at the percentage of less than 25 wt% (23 wt%). For this reason, in a normal state (a state other than the state of battery abnormality), movement of lithium ions between the active material and the nonaqueous electrolytic solution is not impeded to secure appropriate discharging/charging operation. At this time, since a ratio of the phosphazene B having a lower boiling point is larger than that of the phosphazene A having a higher boiling point, at the time of battery abnormality, the phosphazene B can continue to decompose even if a part of a decomposed gas of the phosphazene B is gushed out of the battery according to the cleavage of the cleavage valve 10. Accordingly, fire resistance of the nonaqueous electrolytic solution can be secured continuously due to the phosphazene A and B.

Incidentally, in this embodiment, an example that LiPF₆ is dissolved at 1 mole/liter into the mixed solution of EC and DMC was explained as the nonaqueous electrolytic solution. However, the present invention is not limited to the same. An ordinary lithium salt as an electrolyte to dissolve the lithium salt into organic solvent can be used. A lithium salt and organic solvent to be used are not limited to specificmaterials. For example, as the electrolyte, LiClO₄, LiAsF₆, LiBF₄, LiB(C₆H₅)₄, CH₃SO₃Li, CF₃SO₃Li or the like, or a mixture thereof may be used. Further, as the organic solvent, for example, propylene carbonate, diethyl carbonate,1,2-dimethxy ethane, 1,2-diethxy ethane, γ-butyrolactone, tetrahydrofuran, 1,3-dioxolane, 4-methyl-1,3-dioxolane, diethylether, sulfolane, methyl-sulfolane, acetonitrile, propionitrile or the like, or mixed solvent of at least two kinds thereof may be used, and a composition ratio of a mixture thereof is not limited to any specific range.

Further, in this embodiment, an example that the phosphazene A and B are used as the flame retardant was explained, however, the present invention is not limited to this and a plurality of flame retardants each having a boiling point closely to that of each organic solvent which constitutes the mixed organic solvent may be selected. For example, phosphate ester, phosphate ester halide, halogenated compound, aluminum hydroxide, antimony oxide or the like may be selected, and the combination of flame retardants or a mixed ratio thereof is not limited, too.

Furthermore, in this embodiment, the lithium manganate as a positive electrode active material and the graphite as a negative electrode active material were respectively exemplified, however, the present invention is not confined to these. For example, a lithium transition metal complex oxide such as lithium cobaltate, lithium nickelate or the like, or a complex oxide including a plurality of transition metals may be used. Further, a material in which a portion of lithium and/or manganese thereof is partially replaced by or doped with element (s) other than these elements may be used. As a negative electrode active material usable for the lithium ion battery other than one shown in the above embodiment, for example, amorphous carbon, natural graphite, cokes and the like may be listed. The particle shapes of these materials may include sphere shape, scale shape, fiber shape, massive shape and the like, but the negative active material is not limited to particular shapes.

Further, in this embodiment, the lithium ionbattery 20 having the structure that the positive and negative pole studs which penetrate the battery lids respectively and these pole studs push with each other via the rod core inside the cylindrical battery container without a bottomwas exemplified, however, the present invention is not limited to the battery shape. For example, the present invention may be applied to a rectangular shaped or other polygonal shaped battery. Furthermore, the present invention is not restricted to a battery structure, and as a battery structure other than that shown in the embodiment, for example, a battery having a structure that a positive terminal is formed by welding a collecting ring which has a bottom and a cylindrical shape and which is connected to a positive electrode plate with a battery lid and a negative terminal is formed by a battery container by welding a collecting ring connected to a negative electrode plate with a bottom of the battery container, or a battery that generation elements are accommodated inside a flat shaped battery containermaybelisted. Further, the present invention canbe applied to a layered type battery other than the electrode group having the winding structure like this embodiment.

### (Example)

Next, Example of the lithium ion battery 20 manufactured according to the above embodiment will be explained below. Incidentally, a lithium ion battery of Control (Comparative Example) manufactured for making a comparison with Example will also be explained.

### (Batteries of Example and Control)

A battery of Example 1 is the same battery as the lithium ion battery 20 of the above embodiment. On the other hand, a battery of Control was manufactured in the same manner as the battery of Example 1 except that the phosphazene B was added as the flame retardant at 35 wt% to the nonaqueous electrolytic solution.

### (Test)

With respect to each battery of Example and Control, the following measurement and test were carried out. Adischarge capacity was measured by discharging each battery after charging under a room temperature. The charging conditions were set on constant voltage of 4.1V, limiting current of 50A and a charging time of 5 hours. The discharging conditions were set on constant current of 100A and final voltage of 3V. Then, a continuous charging test for charging each battery from SOC 100% to 150% with constant current of 50A under a room temperature was carried out to observe whether the decomposed gas generated from the nonaqueous electrolytic solution catches fire or not at a time that a temperature inside each battery goes up. The results are shown in Table 1.

**Table 1**

| Battery Temp. | Example 1 | Control 1 |
|---|---|---|
| 100 deg. C. | Did not catch fire | Did not catch fire |
| 150 deg. C. | Did not catch fire | Did not catch fire |
| 200 deg. C. | Did not catch fire | Caught fire |
| 250 deg. C. | Did not catch fire | Caught fire |

In both of the batteries of Example and Control, the cleavage valve 10 cleaved when the temperature inside the batteries reached 80 deg. C. The batteries were continued to be charged after that. As shown in Table 1, in the battery of Control 1 that the phosphazene B as the flame retardant was added at 35 wt%, it was observed that the decomposed gas of the nonaqueous electrolytic solution caught fire when the temperature inside the battery reached 200 deg. C. This gives an idea that, in the battery of Control 1, after the cleavage of the cleavage valve occurred due to the decomposed gas, both the decomposed gas of the nonaqueous electrolytic solution and the decomposed gas of the phosphazene B gushed outside the battery, and the decomposed gas of the nonaqueous electrolytic solution caught fire after the decomposed gas of the phosphazene B has run out.

By contrast, it is considered that, in the battery 20 of Example 1 that 9 wt% of the phosphazene A and 14 wt% of the phosphazene B are added as the flame retardant, even after the decomposed gas of the phosphazene B has run out, the phosphazene A continued to decompose to be able tomaintain fire resistance at a higher temperature due to a decomposed gas thereof.

### (Industrial Applicability)

Because the present invention provides a lithium ion battery capable of maintaining for a long time fire resistance of the nonaqueous electrolytic solution at a time of battery abnormality to secure safety, the present invention contributes to manufacturing and marketing of a lithium ion battery. Thus, the present invention has industrial applicability.

## Claims

1. A lithium ion battery where an electrode group that a positive electrode plate and a negative electrode plate are disposed via separators is infiltrated by a nonaqueous electrolytic solution in which a lithium salt is mixed with organic solvent and that is accommodated in a battery container,
wherein the organic solvent is formed by mixing a plurality of organic solvents,
and wherein a plurality of liquid flame retardants each having a boiling point closely to that of each of the plurality of organic solvents are added to the nonaqueous electrolytic solution.

2. The lithium ion battery according to claim 1, wherein the plurality of liquid flame retardants each having a boiling point set within a range of ± 50 deg. C. to that of each of the plurality of organic solvents are added to the nonaqueous electrolytic solution.

3. The lithium ion battery according to claim 1, wherein the organic solvent is mixed organic solvent of ethylene carbonate and dimethyl carbonate, and wherein phosphazene flame retardants A and B each having a different boiling point are added to the nonaqueous electrolytic solution.

4. The lithium ion battery according to claim 3, wherein the boiling point of the phosphazene flame retardant A is 194 deg. C. and that of the phosphazene flame retardant B is 125 deg. C.

5. The lithium ion battery according to claim 1, wherein an added amount of the flame retardants is less than 25 wt% to mixed liquid of the nonaqueous electrolytic solution and the flame retardants.

6. The lithium ion battery according to claim 1, wherein, in the flame retardants, a flame retardant having a low boiling point is added more than a flame retardant having a high boiling point.

7. The lithium ion battery according to claim 1, wherein a lithium transition metal complex oxide is used as a positive electrode active material in the positive electrode plate.

8. The lithium ion battery according to claim 7, wherein a carbon material is used as a negative electrode active material in the negative electrode plate.

9. The lithium ion battery according to claim 8, wherein the positive electrode plate is formed by applying a positive electrode mixture containing the positive electrode active material to both surfaces of a collector and the negative electrode plate is formed by applying a negative electrode mixture containing the negative electrode active material to both surfaces of a collector.

10. The lithium ion battery according to claim 1, wherein the electrode group is formed by winding the positive electrode plate and the negative electrode plate via the separators.
